(19) Europäisches Patentamt
European Patent Office
Office européen des brevets

(11) **EP 1 165 639 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(21) Anmeldenummer: **00906374.4**

(22) Anmeldetag: **24.02.2000**

(51) Int Cl.:
*C08F 220/18* (2006.01)   *C09J 133/08* (2006.01)
*B32B 27/30* (2006.01)

(86) Internationale Anmeldenummer:
**PCT/EP2000/001537**

(87) Internationale Veröffentlichungsnummer:
**WO 2000/050480 (31.08.2000 Gazette 2000/35)**

(54) **WÄSSRIGE N-BUTYLACRYLAT-COPOLYMER-DISPERSIONEN FÜR DIE VERWENDUNG ALS KASCHIERKLEBSTOFFE**

AQUEOUS N-BUTYL ACRYLATE COPOLYMER DISPERSIONS FOR USE AS LAMINATING ADHESIVES

DISPERSIONS AQUEUSES DE COPOLYMERE DE N-BUTYLACRYLATE DESTINEES A ETRE UTILISEES COMME ADHESIFS LAMINES

(84) Benannte Vertragsstaaten:
**DE GB IT NL**

(30) Priorität: **25.02.1999 DE 19908183**

(43) Veröffentlichungstag der Anmeldung:
**02.01.2002 Patentblatt 2002/01**

(73) Patentinhaber: **BASF Aktiengesellschaft**
**67056 Ludwigshafen (DE)**

(72) Erfinder:
• **GERST, Matthias**
**D-67433 Neustadt (DE)**

• **CENTNER, Alexander**
**D-67127 Rödersheim-Gronau (DE)**
• **SCHUMACHER, Karl-Heinz**
**D-67433 Neustadt (DE)**

(74) Vertreter: **Kinzebach, Werner et al**
**Ludwigsplatz 4**
**67059 Ludwigshafen (DE)**

(56) Entgegenhaltungen:
**EP-A- 0 900 651        DE-A- 19 649 383**
**US-A- 2 976 203        US-A- 2 976 204**

**Beschreibung**

Die vorliegende Erfindung betrifft wässrige Polymerdispersionen und deren Verwendung in wässrigen Klebstoffzubereitungen für die Herstellung von Laminaten.

Die Verwendung von wässrigen Polymerdispersionen als Klebstoffe bzw. in wässrigen Klebstoffzubereitungen ist dem Fachmann bekannt. Gegenüber lösungsmittelhaltigen Klebstoffen bieten sie den Vorteil, dass Lösungsmittelabfälle und -emissionen grundsätzlich vermieden werden können.

An Klebstoffe für die Herstellung von Laminaten, die im Folgenden auch als Kaschierklebstoffe bezeichnet werden, stellt man in der Praxis eine Vielzahl von unterschiedlichen Anforderungen. Beispielsweise wird gewünscht, dass Kaschierklebstoffe universell einsetzbar sind, d.h. sie sollen sich gleichermaßen für die Verklebung von unterschiedlichen Polymerfolien, z.B. aus Polyethylen (PE), orientiertem Polypropylen (OPP), Polyamid (PA) oder Polyethylenterephthalat (PETP) miteinander, für deren Verklebung mit Aluminiumfolien oder metallisierten Polymerfolien und für die Verklebung von Polymerfolien mit Papier eignen.

Die Kaschierklebstoffe sollen zu den Substraten eine gute Haftung aufweisen und nach der Kaschierung eine hohe und dauerhafte Festigkeit der erhaltenen Laminate (Folienverbunde) bewirken. Weiterhin ist eine hohe Sofortfestigkeit des Folienverbunds wünschenswert, um eine rasche weiterverarbeitung insbesondere bei mehrschichtigen Laminaten zu gewährleisten. Die Verarbeitung in den Kaschieranlagen setzt außerdem eine hohe Scherstabilität der Dispersionen und gute Fließeigenschaften voraus.

Die bisher im Handel erhältlichen wässrigen Polymerdispersionen erfüllen die an Kaschierklebstoffe gestellten Anforderungen noch nicht in ausreichendem Maße.

Aus der WO 92/12213 und der EP-A 622 434 sind Kaschierklebstoffe auf Basis wässriger Polymerisatdispersionen bekannt, die sowohl wenigstens eine ethylenisch ungesättigte Carbonsäure und wenigstens eine ethylenisch ungesättigte Sulfonsäure einpolymerisiert enthalten. Aufgrund der Säurekombination führen derartige Klebstoffe zu vergleichsweise hohen Festigkeit des Laminats. Ethylenisch ungesättigte Sulfonsäuren sind jedoch vergleichsweise teuer und weisen in vielen Ländern keine lebensmittelrechtliche Zulassung auf, so dass ein Ersatz dieser Monomere in Polymeren für Kaschierklebstoffe wünschenswert ist.

In der DE-A 196 49 383 und der älteren Anmeldung DE 197 38 185.5 werden wässrige Polymerdispersionen auf der Basis von Alkylacrylaten und deren Verwendung als Kaschierklebstoffe beschrieben. Die beschriebenen Klebstoffe führen zu einer guten Sofortfestigkeit der Laminate.

Aus der älteren Anmeldung DE 19816742 sind wässrige Kaschierklebstoffzubereitungen bekannt, deren Polymere Anhydridgruppen aufweisen. Für eine optimale Klebewirkung müssen den Dispersionen beim Konfektionieren Aminogruppen enthaltende Vernetzer zugesetzt werden. Derartige, aus zwei Komponenten bestehende Klebstoffzubereitungen (2K-Systeme) sind naturgemäß in ihrer Herstellung aufwendiger als solche, die aus der Polymerdispersion als alleiniger Klebstoffkomponente bestehen (1K-Systeme). Zudem sind 1K-Systeme häufig nicht ausreichend lagerstabil.

Der vorliegenden Erfindung liegt die Aufgabe zugrunde, wässrige Polymerdispersionen bereitzustellen, die als Kaschierklebstoffe eine gegenüber dem Stand der Technik verbesserte Festigkeit des Laminats bewirken, ohne dass Sulfonsäuregruppen enthaltende Monomere oder Vernetzer erforderlich sind.

Es wurde nun überraschenderweise gefunden, dass wässrige Polymerdispersionen, die im Wesentlichen aus n-Butylacrylat aufgebaut sind, zu besonders stabilen Laminaten mit einer hohen Dauer- und Sofortfestigkeit führen, wenn man die Polymere in Gegenwart geringer Mengen eines Polymerisationsreglers herstellt.

Demnach betrifft die vorliegende Erfindung wässrige Polymerdispersion, enthaltend wenigstens ein teilchenförmiges Polymer P mit einer Glasübergangstemperatur $T_G$ unterhalb 0 °C, das aufgebaut ist aus ethylenisch ungesättigten Monomeren M, umfassend:

   i. 60 bis 94,9 Gew.-%, vorzugsweise 75 bis 89,5 Gew.-% n-Butylacrylat als Monomer M1,

   ii. 5 bis 39,9 Gew.-%, vorzugsweise 10 bis 24,5 Gew.-% wenigstens eines Monomers M2, ausgewählt unter Estern der Methacrylsäure mit $C_1$ bis $C_4$-Alkanolen, tert.-Butylacrylat und vinylaromatischen Monomeren, sowie

   iii. 0,1 bis 5 Gew.-%, vorzugsweise 0,5 bis 2 Gew.-%, wenigstens eines Monomers M3, ausgewählt unter ethylenisch ungesättigten Verbindungen mit wenigstens einer Säuregruppe,

wobei die Anteile der Monomere M1 bis M3 auf 100 Gew.-% Monomere M bezogen sind,
erhältlich durch radikalische, wässrige Emulsionspolymerisation der Monomere M in Gegenwart von wenigstens 0,01 Gew.-%, bezogen auf das Gewicht der Monomere M, wenigstens eines Molekulargewichtsreglers. Die vorliegende Erfindung betrifft auch die Verwendung derartiger Polymerdispersionen in Klebstoffzubereitungen für die Herstellung von Laminaten sowie die entsprechenden Kaschierklebstoffe.

Unter den erfindungsgemäßen Dispersionen der Polymere P sind solche bevorzugt, die durch Polymerisation der Monomere M in Gegenwart von wenigstens 0,05 Gew.-% und höchstens 0,5 Gew.-%, vorzugsweise in Gegenwart von 0,1 bis 0,5 Gew.-%, insbesondere 0,15 bis 0,4 und speziell 0,2 bis 0,3 Gew.-%, bezogen auf 100 Gew. Teile der zu polymerisierenden Monomere M, wenigstens eines Molekulargewichtsreglers erhältlich sind. Es wird vermutet, dass bereits geringe Mengen Molekulargewichtsregler die bei der radikalischen Polymerisation stets in untergeordnetem Maße ablaufenden Vernetzungsreaktionen der Polymere zurückdrängen. Der K-Wert der in den Dispersionen enthaltenen Polymere P beträgt in der Regel nicht mehr als 90 (K-Wert nach Fikentscher, gemessen in Tetrahydrofuran als 1 gew.-%ige Lösung bei 25 °C).

Typische Molekulargewichtsregler sind organische Schwefelverbindungen, halogenierte Kohlenwasserstoffe, Silane, Allylalkohole oder Aldehyde. Erfindungsgemäß bevorzugte Molekulargewichtsregler sind Verbindungen mit wenigstens einer Thiolgruppe wie Thioglykolsäure, Thioglykolsäureethylester, Mercaptoethanol, Mercaptopropyltrimethoxysilan, sowie lineare oder verzweigte Alkylmercaptane wie tert.-Butylmercaptan und tert.-Dodecylmercaptan. Die Zugabe des Reglers in das Polymerisationsgefäß erfolgt vorzugsweise kontinuierlich während der Polymerisation der Monomere M. Vorzugsweise werden sowohl die Hauptmenge der zu polymerisierenden Monomere M als auch die Hauptmenge des Molekulargewichtsreglers kontinuierlich der Polymerisationsreakion zugeführt. Vorzugsweise führt man den Molekulargewichtsregler als separate, vorzugsweise wässrige Lösung oder gemeinsam mit den Monomeren, z.B. in einer wässrigen Monomeremulsion kontinuierlich der Polymerisationsreaktion zu.

Die als Monomere M2 genannten vinylaromatischen Monomere umfassen Styrol, $\alpha$-Methylstyrol, ortho-Chlorstyrol oder Vinyltoluole. Zu den Estern der Methacrylsäure mit $C_1$-$C_4$-Alkanolen zählen Methacrylsäuremethylester, Methacrylsäureethylester, Methacrylsäureisopropylester, Methacrylsäure-n-butylester, Methacrylsäureisobutylester und Methacrylsäure-tert.-butylester. Bevorzugte Monomere M2 sind Methylmethacrylat und Styrol.

Monomere M3 umfassen sowohl Monomere, die wenigstens eine saure Gruppen enthalten, als auch deren Anhydride und deren Salze. Zu den Monomeren M3 zählen $\alpha,\beta$-monoethylenisch ungesättigte Mono- und Dicarbonsäuren, Halbester von $\alpha,\beta$-monoethylenisch ungesättigten Dicarbonsäuren, die Anhydride der vorgenannten $\alpha,\beta$-monoethylenisch ungesättigten Carbonsäuren sowie ethylenisch ungesättigte Sulfonsäuren, Phosphonsäuren oder Dihydrogenphosphate und deren wasserlösliche Salze, z.B. deren Alkalimetallsalze. Bevorzugte Monomere M3 sind $\alpha,\beta$-monoethylenisch ungesättigten $C_3$-$C_8$-Carbonsäuren und $C_4$-$C_8$-Dicarbonsäuren, z. B. Itaconsäure, Crotonsäure, Vinylessigsäure, Acrylamidoglykolsäure, Acrylsäure und Methacrylsäure, sowie deren Anhydride. Besonders bevorzugte Monomere M3 sind Acrylsäure und Methacrylsäure.

Neben den vorgenannten Monomeren M1 bis M3 können die Monomere M auch weitere Hilfsmonomere umfassen. Hierzu zählen beispielsweise neutrale bzw. nichtionische, modifizierende Monomere M4 mit erhöhter Wasserlöslichkeit, z. B. die Amide oder die N-Alkylolamide der vorgenannten Carbonsäuren, beispielsweise Acrylamid, Methacrylamid, N-Methylolacrylamid und N-Methylolmethacrylamid, weiterhin die Hydroxyalkylester der vorgenannten $\alpha,\beta$-monoethylenisch ungesättigten Carbonsäuren wie Hydroxyethylacrylat, Hydroxyethylmethacrylat, Hydroxypropylacrylat und Hydroxypropylmethacrylat. Weiterhin kommen als Hilfsmonomere M4 die Nitrile $\alpha,\beta$-monoethylenisch ungesättigter $C_3$-$C_8$-Carbonsäuren, wie Acrylnitril oder Methacrylnitril in Betracht. Die Monomere M umfassen in der Regel weniger als 5 Gew.-%, insbesondere weniger als 2 Gew.-% Monomere M4. Die Gesamtmenge an Monomer M3 und Monomer M4 macht typischerweise weniger als 5 Gew.-%, bezogen auf die Gesamtmonomermenge, aus.

Ferner können die Polymere P auch bifunktionelle Monomere M5 aufweisen, den neben einer ethylenisch ungesättigten Doppelbindung wenigstens eine Glycidyl- oder Carbonylgruppe aufweisen. Beispiele für Monomere M5 sind ethylenisch ungesättigte Glycidylether und -ester, z.B. Vinyl-, Allyl- und Methallylglycidylether, Glycidylacrylat und -methacrylat, die Diacetonylamide der obengenannten ethylenisch ungesättigten Carbonsäuren, z.B. Diaceton(meth)acrylamid, und die Ester der Acetylessigsäure mit den obengenannten Hydroxyalkylestern ethylenisch ungesättigter Carbonsäuren, z. B. Acetylacetoxyethyl(meth)acrylat. Monomere M5 ermöglichen ebenso wie die als Monomere M3 genannten Anhydride $\alpha,\beta$-monoethylenisch ungesättigter Mono- und Dicarbonsäuren die Nachvernetzung der erfindungsgemäßen Polymere P, beispielsweise mit polyfunktionellen Aminen, Hydraziden oder Alkoholen.

Weiterhin kann ein Teil des n-Butylacrylats durch andere Ester der Acrylsäure mit $C_1$-$C_{10}$-Alkanolen oder mit $C_5$-$C_{10}$-Cycloalkanolen wie Ethylacrylat, 2-Ethylhexylacrylat und Cyclohexylacrylat ersetzt sein, wobei der Anteil dieser von n-Butylacrylat und tert.-Butylacrylat verschiedenen Acrylester weniger als 20 Gew.-% und insbesondere weniger als 10 Gew.-% bezogen auf die Gesamtmonomermenge ausmacht.

Vorzugsweise ist das Polymer P ausschließlich aus den Monomeren M1, M2 und M3 aufgebaut. Vorzugsweise umfassen die Monomere M3 keine Anhydride $\alpha,\beta$-monoethylenisch ungesättigter Mono- und Dicarbonsäuren. In einer besonders bevorzugen Ausführungsform ist das Polymer P aufgebaut aus:

i. 70 bis 94,9 Gew.-%, insbesondere 80 bis 89,5 Gew.-% n-Butylacrylat,

ii. 5 bis 29,9 Gew.-%, insbesondere 10 bis 19,5 Gew.-% Methylmethacrylat und/oder Styrol

iii. 0,1 bis 5 Gew.-%, insbesondere 0,5 bis 2 Gew.-% einer α,β-monoethylenisch ungesättigte Monocarbonsäure, insbesondere Acrylsäure und/oder Methacrylsäure.

wobei sich die Gewichtsteile der Monomere zu 100 Gew.-% addieren.

Die Glasübergangstemperatur $T_G$ der in den erfindungsgemäßen Dispersionen enthaltenen Polymere P liegt vorzugsweise im Bereich von -60 °C bis -10 °C, insbesondere im Bereich von -50 °C bis -15 °C und speziell im Bereich von -40 °C bis -20 °C. Hierbei erweist es sich als hilfreich, die Glasübergangstemperatur $T_G$ des dispergierten Polymers abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von Mischpolymerisaten bei großen Molmassen in guter Nährung

$$\frac{1}{T_G} = \frac{X^1}{T_g^1} + \frac{X^2}{T_g^2} + \cdots \cdot \frac{X^n}{T_g^n}$$

wobei $X^1$, $X^2$, ..., $X^n$ die Massenbrüche der Monomere 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Weiterhin hat es sich als vorteilhaft erwiesen, wenn die Polymerteilchen des Polymers P in den erfindungsgemäßen Polymerdispersionen einen mittleren Teilchendurchmesser im Bereich von 50 bis 1 000 nm aufweisen (bestimmt mittels Ultrazentrifuge oder durch Photonenkorrelationsspektroskopie; zur Teilchengrößenbestimmung siehe W.Mächtle, Angew. Makromolekulare Chemie 1984, Bd. 185, 1025-1039, W.Mächtle ebenda, 1988, Bd. 162, 35-42). Bei Zubereitungen, mit hohen Feststoffgehalten, z. B. > 50 Gew.-%, bezogen auf das Gesamtgewicht der Zubereitung, ist es aus Gründen der viskosität von Vorteil, wenn der gewichtsmittlere Teilchendurchmesser der Polymerteilchen in der Dispersion wenigstens 100 nm beträgt. Der mittlere Teilchendurchmesser wird vorzugsweise 600 nm nicht überschreiten. Ferner hat es sich als günstig erwiesen, wenn die Teilchendurchmesser der individuellen Polymerteilchen über einen großen Bereich variieren, insbesondere die Größenverteilung zwei oder mehrere Maxima aufweist (Polymerdispersionen mit bi- oder polymodaler Polymerteilchengrößenverteilung). Maßnahmen zur Einstellung der Polymerteilchengrößenverteilung sind dem Fachmann bekannt (siehe beispielsweise EP-A 614 922 und dort genannte Druckschriften).

Der Feststoffgehalt der erfindungsgemäßen Polymerdispersionen liegt typischerweise im Bereich von 30 bis 75 Gew.-% und vorzugsweise im Bereich von 40 bis 70 Gew.-%. Für die erfindungsgemäße Verwendung ist es von Vorteil, wenn der Feststoffgehalt möglichst groß ist, d.h wenigstens 50 Gew.-% beträgt.

Die Herstellung der erfindungsgemäß zur Anwendung kommenden wässrigen Polymerisatdispersionen erfolgt erfindungsgemäß durch radikalische wässrige Emulsionspolymerisation der genannten Monomere M in Gegenwart der oben angegebenen Mengen wenigstens eines Molekulargewichtsreglers. Üblicherweise führt man die Emulsionspolymerisation in einem wässrigen Polymerisationsmedium in Gegenwart wenigstens eines radikalischen Polymerisationsinitiators und gegebenenfalls einer grenzflächenaktiven Substanz durch.

Als radikalische Polymerisationsinitiatoren kommen grundsätzlich sowohl Peroxide, z. B. Wasserstoffperoxyd, organische Peroxide wie tert.-Butylhydroperoxyd, Alkalimetall- und Ammoniumperoxodisulfate als auch Azoverbindungen in Betracht. Bevorzugt werden Redoxinitiatorsysteme verwendet, die aus wenigstens einem organischen Reduktionsmittel und wenigstens einem Peroxid und/oder Hydroperoxid zusammengesetzt sind, z. B. tert.-Butylhydroperoxid und einer Schwefelverbindung, z.B. das Natriumsalz der Hydroxymethansulfinsäure, Natriumsulfit, Natriumdisulfit, Natriumthiosulfat oder Acetonbisulfit-Addukt, oder Wasserstoffperoxid mit Ascorbinsäure. Auch können für diesen Zweck Redoxinitiatorsysteme verwendet werden, die eine geringe Menge einer im Polymerisationsmedium löslichen Metallverbindung enthalten, deren metallische Komponente in mehreren Wertigkeitsstufen auftreten kann, z. B. Ascorbinsäure/ Eisen(II)sulfat/Wasserstoffperoxid, wobei anstelle von Ascorbinsäure auch häufig das Natriumsalz der Hydroxymethansulfinsäure, Acetonbisulfit-Addukt, Natriumsulfit, Natriumhydrogensulfit oder Natriumdisulfit und anstelle von Wasserstoffperoxid organische Peroxide, wie tert.-Butylhydroperoxid, Alkaliperoxodisulfate und/oder Ammoniumperoxodisulfat verwendet werden kann. Ebenfalls bevorzugte Initiatoren sind Peroxodisulfate, wie Natriumperoxodisulfat oder Ammoniumperoxodisulfat. vorzugsweise beträgt die Menge der eingesetzten radikalischen Initiatorsysteme, bezogen auf die Gesamtmenge der zu polymerisierenden Monomeren, 0,1 bis 2 Gew.-%.

Der Initiator kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise zugesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs dem Polymerisationsgefäß zugeführt.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,1 bis 5 Gew.-% und insbesondere 0,5 bis 4 Gew.-%, bezogen auf die zu polymerisierenden Monomere eingesetzt. Die oberflächenaktiven Substanzen verbleiben naturgemäß in den Polymerdispersionen und sind damit auch Bestandteil der erfindungsgemäßen Kaschierklebstoffe.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein.

Zu den anionischen Emulgatoren zählen Alkali- und Ammoniumsalze von Alkylsulfaten (Alkylrest: $C_8$-$C_{12}$), von Dialkylestern der Sulfobernsteinsäure (Alkylrest: $C_4$-$C_{10}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_{10}$), von Alkylsulfonsäuren (Alkylrest: $C_{12}$-$C_{18}$) und von Alkylarylsulfonsäuren (Alkylrest: $C_9$ bis $C_{18}$). Zu den anionischen grenzflächenaktiven Substanzen zählen auch Mono- und Dialkylderivate von Sulfonylphenoxybenzolsulfonsäure-Salzen, insbesondere von deren Natrium-, Kalium- oder Calciumsalze. Die Alkylgruppen in diesen Verbindungen weisen in der Regel 6 bis 18 und insbesondere 6, 12 oder 16 C-Atome auf. Häufig werden technische Gemische verwendet, die einen Anteil von 50 bis 90 Gew.-% des monoalkylierten Produktes aufweisen. Diese Verbindungen sind allgemein bekannt, z. B. aus der US-A-4,269,749, und im Handel erhältlich, beispielsweise als Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxilierungsgrad von 8 bis 50.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Bevorzugt umfassen die für die Herstellung der erfindungsgemäßen Polymerdispersionen verwendeten oberflächenaktiven Substanzen wenigstens einen anionischen Emulgator. Für die Stabilität der erfindungsgemäßen Polymerdispersionen, insbesondere gegenüber mechanischen Belastungen wie Scherkräften, hat es sich als vorteilhaft erwiesen, wenn die zur Herstellung der erfindungsgemäßen Dispersionen bevorzugt eingesetzten anionischen Emulgatoren wenigstens ein Salz eines Dialkylesters der Sulfobernsteinsäure (linearer oder verzweigter $C_4$-$C_{10}$- und insbesondere $C_8$-Alkylrest), vorzugsweise ein Alkalimetallsalz und insbesondere das Natriumsalz umfassen.

Die Emulsionspolymerisation erfolgt in der Regel bei 30 bis 130, vorzugsweise 50 bis 90 °C. Eine Einstellung eines K-Wertes < 90 kann man auch durch Polymerisation bei Temperaturen oberhalb 90 °C und insbesondere oberhalb 100 °C erreichen.

Das Polymerisationsmedium kann sowohl nur aus Wasser, als auch aus Mischungen aus Wasser und damit mischbaren. organischen Flüssigkeiten wie Methanol, Ethanol, n-Propanol, iso-Propanol, n-Butanol, tert.-Butanol, Tetrahydrofuran, Formamid, Dimethylformamid, bestehen, wobei der Anteil dieser Flüssigkeiten, bezogen auf das Polymerisationsmedium üblicherweise weniger als 10 Gew.-% ausmacht. Hierbei ist zu berücksichtigen, dass die Gegenwart von Alkoholen bei der Polymerisation zu einer Verringerung des Molekulargewichts führen kann. Vorzugsweise wird nur Wasser als Polymerisationsmedium verwendet.

Die Emulsionspolymerisation kann sowohl als Batchprozess als auch in Form eines Zulaufverfahrens, einschließlich Stufen oder Gradientenfahrweise, durchgeführt werden. Bevorzugt ist das Zulaufverfahren, bei dem man die Monomeren in reiner oder in emulgierter Form kontinuierlich, stufenweise oder unter Überlagerung eines Konzentrationsgefälles unter Aufrechterhaltung der Polymerisation der Polymerisationszone zuführt. Die einzelnen Komponenten können dem Reaktor beim Zulaufverfahren von oben, in der Seite oder von unten durch den Reaktorboden zugegeben werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40 419, EP-A-614 922, EP-A-567 812 und dort zitierte Literatur sowie 'Encyclopedia of Polymer Science and Technology', Vol. 5, John Wiley & Sons Inc., New York 1966, S. 847).

Bei dem Saatlatex-Verfahren wird die Polymerisation üblicherweise in Anwesenheit von 0,001 bis 3 Gew.-% und insbesondere 0,01 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 100 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch Monomere M3 und/oder M4, vorzugsweise weniger als 10 Gew.-%, bezogen auf das Gesamtgewicht der Polymerisatteilchen im Saatlatex, einpolymerisiert enthalten kann.

Zur Entfernung der Restmonomere wird üblicherweise im Anschluss an die Polymerisation eine Desodorierung auf physikalischem Wege, z.B. durch Abdestillieren der flüchtigen Monomere mit Wasserdampf, oder auf chemischem Wege durchgeführt. Bei der chemischen Desodorierung wird nach Ende der eigentlichen Emulsionspolymerisation, d.h. nach einem Umsatz der Monomeren von mindestens 95 %, oder nachdem der Restmonomergehalt durch physikalische Desodorierung auf einen Wert < 5 Gew.-% abgesenkt wurde, weiterer Initiator, z.B. ein Redoxinitiator zugesetzt.

Die erfindungsgemäßen Polymerdispersionen werden erfindungsgemäß in wässrigen Klebstoffzubereitungen für die Herstellung von Laminaten, d.h. in wässrigen Kaschierklebstoffzubereitungen zum Verkleben von großflächigen Substraten verwendet. Die vorliegende Erfindung betrifft somit auch ein Verfahren zur Herstellung von Laminaten, bei dem man eine wässrige Klebstoffzubereitung einsetzt, die wenigstens eine der erfindungsgemäßen Polymerdispersionen umfasst. Hierbei können die wässrigen Polymerdispersionen als solche oder nach Konfektionierung mit üblichen Hilfsstoffen eingesetzt werden. Übliche Hilfsstoffe sind beispielsweise Netzmittel, Verdicker, Schutzkolloide, Lichtschutzstabilisatoren und Biozide. Die erfindungsgemäßen Klebstoffzubereitungen benötigen nicht den Zusatz von weichmachenden Harzen (Tackifiern) oder anderen Weichmachern.

Bei dem erfindungsgemäßen Verfahren zur Herstellung von Laminaten wird die erfindungsgemäße Polymerdispersion oder eine entsprechend konfektionierte Zubereitung auf die zu verklebenden, großflächigen Substrate vorzugsweise mit einer Schichtdicke von 0,1 bis 20, besonders bevorzugt 1 bis 7 g/m$^2$ z.B. durch Rakeln, Streichen etc. aufgetragen. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200, vorzugsweise 20 bis 100 °C und der Druck z.B. 100 bis 3000, vorzugsweise 300 bis 2000 kN/m$^2$ betragen kann.

Als Substrate eignen sich z.B. Polymerfolien, insbesondere aus Polyethylen (PE), orientiertem Polypropylen (OPP), Polyamid (PA), Polyethylenterephthalat (PETP), Polyacetat, Zellglas, mit Metall, z.B. Aluminium, beschichtete (bedampfte) Polymerfolien (kurz: metallisierte Folien) oder auch Papier, Karton oder Metallfolien, z.B. aus Aluminium. Die genannten Folien können miteinander, mit einem anderen Substrat oder einer Folie eines anderen Typs, z.B. Polymerfolien mit Metallfolien, Polymerfolien mit Papier, verschiedene Polymerfolien miteinander etc. verklebt werden. Die genannten Folien können beispielsweise auch mit Druckfarben bedruckt sein.

Die erfindungsgemäßen Polymerdispersionen können sowohl in Klebstoffzubereitungen für die Glanzfolienkaschierung als auch in Klebstoffzubereitungen für die Verbundfolienkaschierung verwendet werden. Bei der Glanzfolienkaschierung werden Papier oder Karton mit transparenten Polymerfolien verklebt. Bei der Verbundfolienkaschierung können die obengenannten Substrate (jedoch kein Papier oder Karton), z.B. unterschiedliche Polymerfolien, miteinander verklebt werden.

Es ist ein Vorteil der Erfindung, dass unterschiedlichste Substrate miteinander verklebt, d.h. kaschiert werden können, wobei die erfindungsgemäßen Polymerdispersionen eine gute Haftung der Klebstoffzubereitung an den Substraten gewährleisten und eine hohe Festigkeit des verklebten Verbundes bewirkt. Zudem zeichnen sich die erfindungsgemäßen Polymerdispersionen durch eine hohe Scherstabilität aus.

Beispiele

I. Herstellung der Polymere P als wässrige Dispersionen D1 bis D5 und VD1 bis VD4:

In einem Polymerisationsreaktor wurden 116 g entionisiertes Wasser und 0,28 g Polystyrol-Saatpolymer (in Form einer wässrigen Dispersion; $d_{50}$ = 30nm) vorgelegt und auf 85 °C erwärmt. Unter Beibehaltung der Temperatur gab man 10 % des Initiatorzulaufs in die Vorlage. Nach 5 Minuten gab man unter Beibehaltung der Temperatur zeitgleich beginnend innerhalb 180 Minuten Monomerzulauf und Initiatorzulauf in den Polymerisationsreaktor. Die Polymerisationstemperatur wurde danach weitere 30 Minuten beibehalten. Dann gab man bei 85 °C 5,6 g einer 10 gew.-%igen wässrigen tert.-Butylhydroperoxid-Lösung und 7,5 g einer wässrigen Lösung des Natriumbisulfit-Adduktes von Aceton (12 %ig) zu. Anschließend kühlte man auf Raumtemperatur und neutralisierte die Dispersion mit 15 gew.-%iger Natronlauge auf pH = 4 bis 5. Der Feststoffgehalt der Dispersion lag bei etwa 54 bis 56 Gew.-%.

Monomerzulauf: wässrige Emulsion aus

|  |  |  |
|---|---|---|
| 275,0 | g | entionisiertem Wasser |

(fortgesetzt)

| | | |
|---|---|---|
| 560,0 | g | Monomere (siehe Tabelle 1) |
| 2,24 | g | Emulgatorlösung 1 |
| 7,47 | g | Emulgatorlösung 2 |
| y | g | tert.-Dodecylmerkaptan (t-DMK; siehe Tabelle 1) |

Emulgatorlösung 1: 60 gew.-%ige wässrige Lösung von Bis-2-ethylhexylsulfobernsteinsäure-Natriumsalz

Emulgatorlösung 2: 45 gew.-%ige wässrige Lösung von Dodecylphenoxybenzoldisulfonsäure-Natriumsalz (DOWFAX® 2A1 der DOW-CHEMICAL)

Initiatorzulauf: Lösung von
2,8 g Natriumperoxodisulfat in
37,2 g Wasser

Tabelle 1:

| Dispersion | n-BuA [%][1) | EHA [%] | MMA [%] | MA [%] | AS [%] | t-DMK [%] | D [2) [nm] | $T_G$ [3) [°C] |
|---|---|---|---|---|---|---|---|---|
| VD1 | 84 | - | 15 | - | 1 | 0 | 293 | -27 |
| D1 | 84 | - | 15 | - | 1 | 0,10 | 274 | -28 |
| D2 | 84 | - | 20 | - | 1 | 0,15 | 292 | -29 |
| D3 | 84 | - | 15 | - | 1 | 0,20 | 278 | -30 |
| D4 | 84 | - | 15 | - | 1 | 0,25 | 296 | -31 |
| D5 | 84 | - | 15 | - | 1 | 0,30 | 288 | -32 |
| VD2 | 42 | 42 | 15 | - | 1 | 0,30 | 305 | -39 |
| VD3 | 84 | - | - | 15 | 1 | 0,30 | 279 | -35 |

n-BuA = n-Butylacrylat, EHA = 2-Ethylhexylacrylat, MMA = Methylmethacrylat, MA = Methylacrylat, t-DMK = tert.-Dodecylmercaptan, AS = Acrylsäure
1) Gew.-%, bezogen auf 100 Gew.-% Monomere
2) Mittlerer Teilchendurchmesser bestimmt mittels eines Malvern Autosizers 2c, Malvern Instruments, England, an 0,01 gew.-%igen Proben.
3) Glasübergangstemperatur (DSC, mid-point)

II. Anwendungstechnische Prüfung der Dispersionen D1 - D5 und VD1 bis VD3

Herstellung der Verbundfolien:

Die neutralisierten Polymerdispersionen wurden mit einer Trockenschichtdicke von 2-3 g/m$^2$ auf verschiedene, handelsübliche Folien gerakelt (Polyethylen = PE, d = 100 $\mu$m, Hersteller 4P-Folien, Forchheim; Polypropylen, einseitig Corona-vorbehandelt = PP, d = 33 $\mu$m; Polyethylenterephthalat = PETP, d = 12 $\mu$m; Aluminium, d = 15 $\mu$m, Hersteller F.A. Universal Alufolien, D.H. Korff). Nach Trocknen mit Warmluft wurden die so beschichteten Folien mit einer zweiten Folie (siehe Tabelle 2) aufgerollt und anschließend mit einem Druck von 6,5 bar in einer Rollenpresse mit 5 m/min bei 70 °C verpresst. Anschließend wurden die Verbundfolien 1 Tag bei Raumtemperatur und Normklima gelagert.

b) Bestimmung der Schälfestigkeit

Hierzu wurden die nach a) erhaltenen Verbundfolien in 15 mm breite Streifen zerschnitten. Anschließend wurden die Streifen bei 23 °C in einer Universalprüfmaschine für Schälfestigkeiten der Fa. Zwick (Typ 1120.25.01) mit einer Geschwindigkeit von 100 mm/min bei einem Winkel von 180° abgezogen und die hierfür erforderliche Kraft (in Newton) gemessen. Die Ergebnisse sind in Tabelle 2 zusammengestellt.

Tabelle 2:

| Beispiel | Dispersion | Schälfestigkeit [N/15mm] | | |
|----------|------------|-------|-------------|---------|
| | | PE/PP | PP/PETP(met) | PETP/Al |
| V1 | VD1 | 1,2 | 0,7 | 1,2 |
| 1 | D1 | 1,6 | 1,0 | 1,7 |
| 2 | D2 | 1,4 | 1,2 | 1,5 |
| 3 | D3 | 1,4 | 0,9 | 1,7 |
| 4 | D4 | 2,2 | 1,6 | 2,5 |
| 5 | D5 | 1,5 | 1,1 | 2,2 |
| V2 | VD2 | 1,1 | 0,7 | 1,1 |
| V3 | VD3 | 0,6 | 0,4 | 0,7 |

PE = Polyethylen
PP = Polypropylen
Al = Aluminium
PETP = Polyethylenterephthalat
PETP(met), mit A1 metallisiertes Polyethylenterephthalat

**Patentansprüche**

1. Wässrige Polymerdispersion, enthaltend wenigstens ein teilchenförmiges Polymer P mit einer Glasübergangstemperatur $T_G$ unterhalb 0 °C, das aufgebaut ist aus ethylenisch ungesättigten Monomeren M, umfassend:

   i. 60 bis 94,9 Gew.-% n-Butylacrylat als Monomer M1,
   ii. 5 bis 39,9 Gew.-% wenigstens eines Monomers M2, ausgewählt unter Estern der Methacrylsäure mit $C_1$ bis $C_4$-Alkanolen, tert.-Butylacrylat und vinylaromatischen Monomeren, sowie
   iii. 0,1 bis 5 Gew.-% wenigstens eines Monomers M3, ausgewählt unter ethylenisch ungesättigten Verbindungen mit wenigstens einer Säuregruppe,

   wobei die Anteile der Monomere M1 bis M3 auf 100 Gew.-% Monomere M bezogen sind,
   erhältlich durch radikalische, wässrige Emulsionspolymerisation der Monomere M in Gegenwart von wenigstens 0,01 Gew.-%, bezogen auf das Gewicht der Monomere M, wenigstens eines Molekulargewichtsreglers, wobei der Molekulargewichtsregler während der Polymerisationsreaktion kontinuierlich dem Reaktionsgefäß zugeführt wird.

2. Wässrige Polymerdispersion nach Anspruch 1, wobei der Molekulargewichtsregler eine organische Verbindung mit wenigstens einer Thiolfunktion ist.

3. Wässrige Polymerdispersion nach einem der vorhergehenden Ansprüche, wobei die Monomere M3 ausgewählt sind unter α,β-ethylenisch ungesättigten Mono- und Dicarbonsäuren und deren Anhydriden.

4. wässrige Polymerdispersion nach einem der vorhergehenden Ansprüche, wobei das Monomer M2 Methylmethacrylat ist.

5. verfahren zur Herstellung einer wässrigen Polymerdispersion nach einem der vorhergehenden Ansprüche, wobei die Monomere M nach der Methode der radikalischen, wässrigen Emulsionspolymerisation in Gegenwart von wenigstens 0,01 Gew.-% wenigstens eines Molekulargewichtsreglers polymerisiert werden, **dadurch gekennzeichnet, dass** der Molekulargewichtsregler während der Polymerisationsreaktion kontinuierlich dem Reaktionsgefäß zugeführt wird.

6. Verwendung der wässrigen Polymerdispersionen nach einem der Ansprüche 1 bis 4 in wässrigen Klebstoffzubereitungen für die Herstellung von Laminaten.

7. Verfahren zur Herstellung von Laminaten durch Verkleben von großflächigen Substraten, wobei man eine wässrige Klebstoffzubereitung, enthaltend eine wässrige Polymerdispersion gemäß einem der Ansprüche 1 bis 4, einsetzt.

**8.** Laminate, erhältlich durch ein Verfahren gemäß Anspruch 7.

**Claims**

**1.** An aqueous polymer dispersion comprising at least one particulate polymer P having a glass transition temperature Tg of less than 0°C which is composed of ethylenically unsaturated monomers M comprising:

  i. from 60 to 94.9% by weight of n-butyl acrylate as monomer M1,
  ii. from 5 to 39.9% by weight of at least one monomer M2 selected from esters of methacrylic acid with $C_1$ to $C_4$ alkanols, tert-butyl acrylate, and vinylaromatic monomers, and
  iii. from 0.1 to 5% by weight of at least one monomer M3 selected from ethylenically unsaturated compounds having at least one acid group,

the proportions of said monomers M1 to M3 being based on 100% by weight of monomers M,
obtainable by free-radical aqueous emulsion polymerization of monomers M in the presence of at least 0.01% by weight, based on the weight of the monomers M, of at least one molecular weight regulator, said molecular weight regulator being supplied continuously to the reaction vessel during the polymerization reaction.

**2.** The aqueous polymer dispersion according to claim 1, wherein the molecular weight regulator is an organic compound having at least one thiol function.

**3.** The aqueous polymer dispersion according to either of the preceding claims, wherein the monomers M3 are selected from $\alpha,\beta$-ethylenically unsaturated mono- and dicarboxylic acids and the anhydrides thereof.

**4.** The aqueous polymer dispersion according to any of the preceding claims, wherein the monomer M2 is methyl methacrylate.

**5.** A process for preparing an aqueous polymer dispersion according to any of the preceding claims, which comprises polymerizing the monomers M by the method of free-radical aqueous emulsion polymerization in the presence of at least 0.01% by weight of at least one molecular weight regulator, wherein said molecular weight regulator is supplied continuously to the reaction vessel during the polymerization reaction.

**6.** The use of the aqueous polymer dispersions according to any of claims 1 to 4 in aqueous adhesive formulations for producing laminates.

**7.** A process for producing laminates by bonding substrates of large surface area, wherein an aqueous adhesive formulation is used comprising an aqueous polymer dispersion according to any of claims 1 to 4.

**8.** A laminate obtainable by a process according to claim 7.

**Revendications**

**1.** Dispersion de polymère aqueuse, contenant au moins un polymère de forme particulaire P avec une température de transition vitreuse $T_G$ inférieure à 0°C, qui est constituée de monomères M éthyléniquement insaturés, comprenant :

  i. 60 à 94,9 % en poids de n-butylacrylate en tant que monomère M1,
  ii. 5 à 39,9 % en poids d'au moins un monomère M2, sélectionné parmi des esters d'acides méthacryliques avec des alcanols en $C_1$ à $C_4$, du tert.-butylacrylate et des monomères vinylaromatiques, de même que
  iii. 0,1 à 5 % en poids d'au moins un monomère M3, sélectionné parmi des composés éthyléniquement insaturés avec au moins un groupe acide,

les proportions des monomères M1 à M3 étant rapportées à 100 % en poids de monomères M,
qui peut être obtenue par polymérisation en émulsion aqueuse radicalaire des monomères M en présence d'au moins 0,01 % en poids, par rapport au poids des monomères M, d'au moins un régulateur de poids moléculaire, le régulateur de poids moléculaire étant amené en continu au réacteur pendant la réaction de polymérisation.

2. Dispersion de polymère aqueuse suivant la revendication 1, le régulateur de poids moléculaire étant un composé organique avec au moins une fonction thiol.

3. Dispersion de polymère aqueuse suivant l'une des revendications précédentes, les monomères M3 étant sélectionnés parmi des acides monocarboxyliques et dicarboxyliques ($\alpha,\beta$-éthyléniquement insaturés et leurs anhydrides.

4. Dispersion de polymère aqueuse suivant l'une des revendications précédentes, le monomère M2 étant du méthacrylate de méthyle.

5. Procédé pour la préparation d'une dispersion de polymère aqueuse suivant l'une des revendications précédentes, les monomères M étant polymérisés suivant la méthode de la polymérisation en émulsion aqueuse radicalaire en présence d'au moins 0,01 % en poids d'au moins un régulateur de poids moléculaire, **caractérisé en ce que** le régulateur de poids moléculaire est amené en continu au réacteur pendant la réaction de polymérisation.

6. Utilisation des dispersions de polymères aqueuses suivant l'une des revendications 1 à 4 dans des préparations d'adhésifs aqueuses pour la préparation de stratifiés.

7. Procédé pour la préparation de stratifiés par collage de substrats de grande surface, dans lequel on met en oeuvre une préparation d'adhésif aqueuse contenant une dispersion de polymère aqueuse suivant l'une des revendications 1 à 4.

8. Stratifiés qui peuvent être obtenus par un procédé suivant la revendication 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9212213 A
- EP 622434 A
- DE 19649383 A
- DE 19738185
- DE 19816742
- EP 614922 A
- US 4269749 A
- EP 40419 B
- EP 567812 A

**In der Beschreibung aufgeführte Nicht-Patentliteratur**

- **T.G. FOX.** Bull. Am. Phys. Soc. 1956, vol. 1, 123
- *Ullmanns Enzyklopädie der technischen Chemie,* 1980, 17, 18
- **W.MÄCHTLE.** *Angew. Makromolekulare Chemie,* 1984, vol. 185, 1025-1039
- **W.MÄCHTLE.** *ANGEW. MAKROMOLEKULARE CHEMIE,* 1988, vol. 162, 35-42
- **HOUBEN-WEYL.** Methoden der organischen Chemie. *Makromolekulare Stoffe,* 1961, vol. XIV/1, 411-420
- **HOUBEN-WEYL.** Methoden der organischen Chemie. *Makromolekulare Stoffe,* 1961, vol. XIV/1, 192-208
- *Literatur sowie 'Encyclopedia of Polymer Science and Technology,* 1966, vol. 5, 847